# EUROPÄISCHE PATENTSCHRIFT

(11) **EP 2 465 176 B1**
(45) Veröffentlichungstag und Bekanntmachung des Hinweises auf die Patenterteilung: **04.03.2015**
(21) Anmeldenummer: 10730409.9
(22) Anmeldetag: 23.06.2010
(51) Int. Cl.: H02J 3/24, H02J 3/32, B60L 11/18, H02J 7/00

(54) **LADESTATION FÜR ELEKTROFAHRZEUGE MIT NETZSTABILISIERUNG**
CHARGING STATION FOR ELECTRIC VEHICLES HAVING NETWORK STABILIZATION
STATION DE CHARGE POUR VÉHICULES ÉLECTRIQUES À STABILISATION DE RÉSEAU

(30) Priorität: 10.08.2009 DE 102009050042
(43) Veröffentlichungstag der Anmeldung: 20.06.2012
(73) Patentinhaber: RWE AG, 45128 Essen (DE)
(72) Erfinder: GAUL, Armin, 59379 Selm (DE); DIEFENBACH, Ingo, 59425 Unna (DE)
(74) Vertreter: Walter, Philipe
(86) Internationale Anmeldenummer: PCT/EP2010/058929
(87) Internationale Veröffentlichungsnummer: WO 2011/018267

(56) Entgegenhaltungen:
- EP-A2- 2 200 149
- JP-A- 2008 141 926
- BROOKS A: "Smarter Charging", INTERNET CITATION, 5. Februar 2008 (2008-02-05), XP007917247, Gefunden im Internet: URL:http://www.teslamotors.com/blog/smarte r-charging [gefunden am 2011-02-16]

## Beschreibung

Der Gegenstand betrifft eine Ladestation für Elektrofahrzeuge mit Netzstabilisierung sowie ein Verfahren zum Betreiben einer Ladestation für Elektrofahrzeuge.

Durch die zunehmende Verbreitung von Elektrofahrzeugen und die damit verbundene Verbreitung von Ladestationen wird die elektrische Last in den elektrischen Energieversorgungsnetzen steigen. Mit steigender Last in den Versorgungsnetzen wächst jedoch auch die Gefahr der Netzunterversorgung. Bei einer solchen Unterversorgung ist die elektrische Last größer als die von den Kraftwerken (Generatoren) zur Verfügung gestellte Leistung. In einem solchen Fall kann die Lastdifferenz lediglich aus der kinetischen Energie der rotierenden Massen der Generatoren gedeckt werden. Dies führt jedoch zwangsläufig zu einer Unterfrequenz in dem Versorgungsnetz, bei der die tatsächliche Netzfrequenz von der Soll-Netzfrequenz abweicht.

Bekannte Maßnahmen zur Sicherung der Stromversorgung bestehen in der Erfassung von Unterfrequenzen und dem Einsatz von Unterfrequenzrelais in Umspannwerken. Wird eine Frequenzabweichung von 1Hz, d.h. eine Frequenz von 49Hz im Netz festgestellt, so erfolgt ein unverzögerter Lastabwurf von 10 bis 15% der Netzlast durch Öffnen der Unterfrequenzrelais. Dies geschieht regelmäßig durch Lastabwurf in der Hochspannungsebene durch Abschaltung der 110/10kV Umspannungstransformatoren. Ein Lastabwurf in den Mittelspannungstransformatoren ist jedoch ebenfalls möglich.

Bei dem Einsatz von Unterfrequenzrelais wird der gesamte Transformator vom Netz getrennt. Dies ist zunehmend problematisch, da heutzutage nicht nur Verbraucher an einen Transformator angeschlossen sind, sondern auch Generatoren. Insbesondere durch die weite Verbreitung von Windgeneratoren und Solarstromanlagen kann es in einigen Bereichen der Niederspannungs-, Mittelspannungs- und/oder Hochspannungsebene dazu kommen, dass bei einem gewollten Lastabwurf tatsächlich auch eine Erzeugungsleistung abgeworfen wird. Das führt jedoch dazu, dass eine Netzstabilisierung nicht eintritt. Vielmehr bleibt ein solcher Lastabwurf wirkungslos. Somit sind intelligente Lösungen zum Lastabwurf notwendig.

Vor dem Hintergrund der zunehmenden Last durch Elektrofahrzeuge lag dem Gegenstand die Aufgabe zugrunde, Ladestationen mit Netzstabilisierung zur Verfügung zu stellen.

Derartige Ladestationen werden zum Beispiel in der WO 2008/135043 und XP007917247 offenbart.

Diese Aufgabe wird gegenständlich durch eine Ladestation für Elektrofahrzeuge gelöst, welche eine Netzfrequenzmesseinrichtung eingerichtet zum Erfassen einer Netzfrequenz und zum Detektieren einer Abweichung der Netzfrequenz von einer Soll-Frequenz, und eine Lastregelungseinrichtung in Wirkverbindung mit der Netzfrequenzeinrichtung umfasst, derart, dass bei einer detektierten Abweichung der Netzfrequenz von der Soll-Frequenz die Lastregelungseinrichtung die an ein Elektrofahrzeug von der Ladestation abgegebene elektrische Leistung regelt.

Diese Aufgabe wird auch gegenständlich durch ein Verfahren zum Betreiben einer Ladestation für Elektrofahrzeuge gelöst, welches das Erfassen einer Netzfrequenz, das Detektieren einer Abweichung der Netzfrequenz von einer Soll-Frequenz und das Regeln einer an ein Elektrofahrzeug von der Ladestation abgegebenen elektrischen Leistung bei einer detektierten Abweichung der Netzfrequenz von der Soll-Frequenz umfasst.

Regeln im Sinne des Gegenstandes kann ein Regulieren, z.B. eine Reduktion oder Erhöhung, sein, wie nachfolgend noch beschrieben wird. Regeln im Sinne des Gegenstandes kann eine schrittweise Veränderung (Erhöhung oder Absenkung) der Last bedeuten. Hierbei kann schrittweise der Ladestrom verändert werden. Eine Veränderung des Ladestroms kann durch die Elektrofahrzeuge bewirkt werden, dadurch, dass ihre Laderegler geringere oder höhere Ladeströme zulassen. Beim regeln im Sinne des Gegenstands kann von der Lastregelungseinrichtung ein Laderegler eines Elektrofahrzeugs angesteuert werden und der Laderegler kann entsprechend der Ansteuerung die Ladelast, z.B. den Ladestrom, regulieren (Vorzeichenumkehr, Reduktion, Erhöhung). Die Lastregelungseinrichtung kann überwachen, ob das Fahrzeug entsprechend der Ansteuerung die Ladeleistung verändert und bei Nichtübereinstimmung den Laderegler und respektive auch das Fahrzeug vom Netz trennen. Regeln kann auch bedeuten, dass eine Leistung von dem Fahrzeug in das Netz eingespeist wird (Vorzeichenumkehr des Ladestroms).

Es ist erkannt worden, dass sich gerade Elektrofahrzeugladestationen für eine Netzstabilisierung eignen, da an diesen Ladestationen einerseits leistungsstarke elektrische Verbraucher (Lasten) angeschlossen sind und andererseits (zukünftig) eine leistungsstarke Einspeisung erfolgen kann. Darüber hinaus ist erkannt worden, dass die an den Ladestationen angeschlossenen elektrischen Verbraucher eine variable Leistungsaufnahme oder Abgabe erlauben. Insbesondere sind bei Ladezeiten für Elektrofahrzeuge von mehreren Stunden Veränderungen der Ladestromstärke während des Ladens möglich, ohne dass die vollständige Ladung der Fahrzeugbatterie zum Ende der Ladezeit gefährdet ist.

Durch den Einsatz einer Netzfrequenzmesseinrichtung in den Ladestationen ist es möglich, eine Veränderung, z.B. einen Einbruch, einer Netzfrequenz festzustellen. Dies erfolgt gegenständlich dezentral, da in einer Vielzahl oder gar in jeder Ladestation eine Netzfrequenzmesseinrichtung eingesetzt sein kann. Auch ist es denkbar, dass in nur bestimmten Ladestationen, beispielsweise jeder fünften, jeder zehnten oder jeder einhundertsten Ladestation eine solche Einrichtung vorgesehen ist.

Die Netzsoll-Frequenz beträgt regelmäßig 50Hz in Europa, in den USA beträgt sie 60Hz. Eine Abweichung hiervon kann mittels der Netzfrequenzmesseinrichtung detektiert werden.

Wird durch die Netzfrequenzmesseinrichtung eine Abweichung detektiert, kann diese die Lastregelungseinrichtung aktivieren, welche ebenfalls in der Ladestation angeordnet ist. Die Lastregelungseinrichtung ist derart eingerichtet, dass sie die an ein Elektrofahrzeug abgegebene elektrische Leistung regeln kann. Hierbei wird insbesondere durch die Lastregelungseinrichtung eine Regelung im Fahrzeug selbst bewirkt. Dies kann durch eine Aufforderung zur Stromreduktion an das Fahrzeug geschehen. Es kann überwacht werden, ob sich das Fahrzeug an diese Aufforderung hält und falls nicht, kann das Fahrzeug vom Netz getrennt werden. Bei einer Absenkung der Netzfrequenz kann mit einer Lastregelungseinrichtung die elektrische Leistung, die an das Elektrofahrzeug abgegeben wird, reduziert werden oder es kann auch eine Leistung von dem Elektrofahrzeug bezogen werden. Hierbei kann das Elektrofahrzeug angewiesen werden, z.B. einen geringeren Ladestrom zuzulassen oder den Ladestrom umzukehren und einen Strom ins Netz zurückspeisen. Durch diese Veränderung der elektrischen Leistung, welche an das / von dem Elektrofahrzeug abgegeben wird, wird auch die elektrische Last im Energieversorgungsnetz reduziert. Sind eine Vielzahl von Ladestationen mit einer Netzfrequenzmesseinrichtung und einer Lastregelungseinrichtung ausgestattet, so kann durch die Ladestationen eine Stabilisierung des Energieversorgungsnetzes erfolgen, ohne dass ein Lastabwurf auf Niederspannungs-, Mittelspannungs-, und/oder Hochspannungsebene notwendig wird. Auch wird durch die Reduktion der elektrischen Leistung, welche auch in einem gänzlichen Lastabwurf des Elektrofahrzeugs münden kann, tatsächlich ausschließlich eine elektrische Last abgeworfen und nicht, wie im Stand der Technik beschrieben, gleichfalls elektrische Generatoren.

Bei einer ansteigenden Netzfrequenz kann beispielsweise auch die von der Ladestation an ein Elektrofahrzeug abgegebene Energie erhöht werden. Insbesondere kann die Ladestromstärke erhöht werden. Dies kann beispielsweise dadurch erfolgen, dass dem Elektrofahrzeug mitgeteilt wird, dass eine erhöhte Ladestromstärke zur Verfügung steht und das Elektrofahrzeug bzw. der Laderegler des Elektrofahrzeugs reguliert die Ladestromstärke entsprechend hoch. Auch kann die Rückspeisung reduziert werden.

Es wird vorgeschlagen, dass die Lastregelungseinrichtung zur Regelung der abgegebenen elektrischen Leistung eine reduzierte Ladeleistung an das Elektrofahrzeug kommuniziert. Hierzu kann durch Aushandeln neuer Ladeparameter, wie beispielsweise der Ladestromstärke, das Elektrofahrzeug dazu aufgefordert werden, eine reduzierte aktuelle Ladeleistung zu beziehen. Der Laderegler des Elektrofahrzeugs kann dann derart eingestellt werden, dass dieser z.B. eine geringere Stromstärke von der Ladestation bezieht und sich somit die Ladeleistung reduziert.

Auch ist es gemäß einem vorteilhaften Ausführungsbeispiel möglich, dass die Lastregelungseinrichtung zur Reduktion der abgegebenen elektrischen Leistung eine Ladestromstärke begrenzt.

Gemäß einem vorteilhaften Ausführungsbeispiel wird vorgeschlagen, dass die Lastregelungseinrichtung die von der Ladestation abgegebene elektrische Leistung entlang einer Absenkkennlinie reduziert. Auch hierbei wird bei der Reduktion bevorzugt das Fahrzeug entsprechend angewiesen. Es ist erkannt worden, dass insbesondere bei einer dezentralen Netzstabilisierung eine abrupte Reduktion der Last, welche durch einen spontanen Lastabwurf von einer Vielzahl von Ladestationen erfolgen würde, nicht zur Netzstabilisierung beiträgt. Daher muss die Absenkung der elektrischen Leistung graduell erfolgen. Dies kann entsprechend einer Absenkkennlinie erfolgen. Die Absenkkennlinie kann eine graduelle Lastabsenkung entsprechend der Veränderung der Netzfrequenz ermöglichen.

Aus diesem Grunde wird vorgeschlagen, dass die Absenkkennlinie abhängig von dem durch die Netzfrequenzmesseinrichtung erfassten Abweichungsbetrag, der Abweichungsdauer und/oder dem Frequenzgradienten ist. Je größer die Frequenzabweichung ist, desto größer kann die Reduktion der bezogenen elektrischen Leistung sein. Auch kann die Abweichungsdauer, d.h. die Dauer während der ein Frequenzeinbruch am Netz detektiert wird, die Höhe der Reduktion der abgegebenen elektrischen Leistung bestimmen. Darüber hinaus kann der Abweichungsgradient, d.h. die Steilheit der Abweichung des Frequenzeinbruchs ausschlaggebend für die Absenkkennlinie sein.

Gemäß einem vorteilhaften Ausführungsbeispiel wird vorgeschlagen, dass bei einer detektierten Erhöhung der Netzfrequenz die Lastregelungseinrichtung, die an ein Elektrofahrzeug von der Ladestation abgegebene elektrische Leistung erhöht. Somit kann, nachdem das Netz stabilisiert wurde und die Netzfrequenz sich der Soll-Frequenz annähert, die abgegebene elektrische Leistung allmählich erhöht werden. Dies kann entlang einer Erhöhungskennlinie erfolgen. Auch kann bei einem Übersteigen der Netzfrequenz über die Soll-Frequenz eine Erhöhung der elektrischen Leistung sinnvoll sein, um die Netzfrequenz der Soll-Frequenz erneut anzunähern.

Gemäß einem vorteilhaften Ausführungsbeispiel besteht das Regulieren der an das Elektrofahrzeug von der Ladestation abgegebenen elektrischen Leistung in einem Reduzieren oder einem Erhöhen der elektrischen Leistung. Dies kann durch ein Reduzieren oder Erhöhen der von dem Elektrofahrzeug bezogenen Stromstärke bewirkt werden.

Gemäß einem vorteilhaften Ausführungsbeispiel wird zur Regulierung der abgegebenen Leistung an das Elektrofahrzeug ein Regulieren der Ladeleistung kommuniziert. Hierüber kann die Ladestation das Elektrofahrzeug auffordern, entweder eine geringere Stromstärke oder eine höhere Stromstärke zu beziehen. Insbesondere ist zur Netzstabilisierung die Reduktion der bezogenen Stromstärke sinnvoll.

Gemäß einem vorteilhaften Ausführungsbeispiel wird auch vorgeschlagen, dass die Reduktion der abgegebenen elektrischen Leistung abhängig von einer Absenkkennlinie ist. Die Absenkkennlinie kann vorteilhafterweise abhängig von dem erfassten Abweichungsbetrag der Frequenz, der Abweichungsdauer der Frequenz und/oder dem Frequenzgradienten bestimmt werden.

Die zuvor genannten Verfahren können auch als Computerprogramm oder als auf einem Speichermedium gespeichertes Computerprogramm realisiert werden. Hierbei kann ladestationsseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale der abhängigen Ansprüche unter Umgehung der Merkmale der unabhängigen Ansprüche in Alleinstellung oder frei miteinander kombiniert eigenständig erfinderisch sein. Nachfolgend wird der Gegenstand anhand einer Ausführungsbeispiele zeigenden Zeichnung näher erläutert. In der Zeichnung zeigen:
- Fig. 1: einen schematischen Aufbau einer Ladestation gemäß einem Ausführungsbeispiel;
- Fig. 2: einen Ablauf eines Verfahrens gemäß einem Ausführungsbeispiel;
- Fig. 3a: eine erste beispielhafte Absenkungskennlinienschar;
- Fig. 3b: eine zweite beispielhafte Absenkungskennlinienschar.

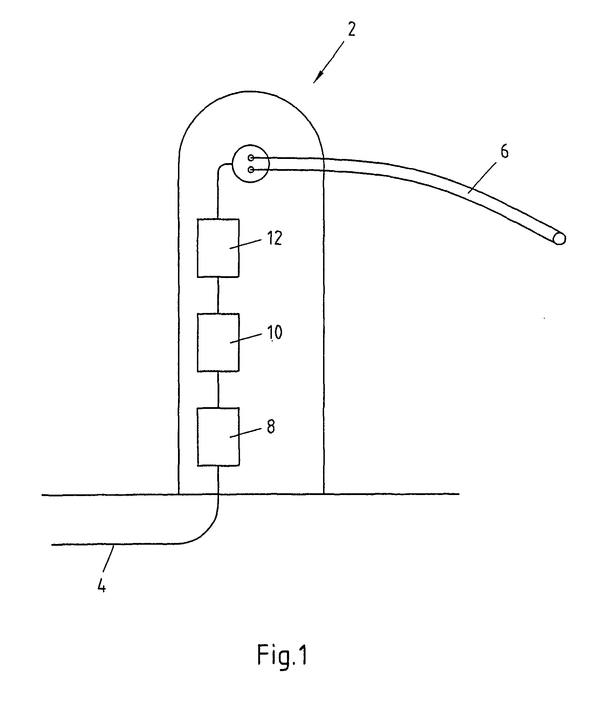

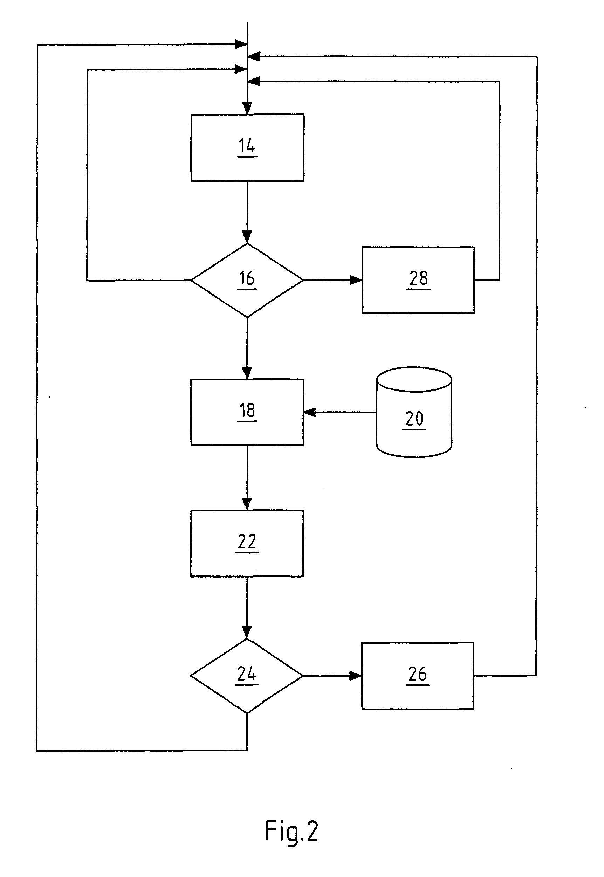

Fig. 1 zeigt eine Ladestation 2 zum Laden von Elektrofahrzeugen (nicht dargestellt). Die Ladestation 2 ist über ein Energiekabel 4 mit einem elektrischen Energieversorgungsnetz verbunden. Über das Energiekabel 4 bezieht die Ladestation 2 elektrische Leistung. Die elektrische Leistung wird über ein Ladekabel 6 dem Elektrofahrzeug zur Verfügung gestellt. In der Ladestation 2, welche vorliegend rein schematisch dargestellt ist, befindet sich eine Netzfrequenzmesseinrichtung 8. Darüber hinaus befindet sich in der Ladestation 2 eine Lastregelungseinrichtung 10 sowie eine Ladesteuerschaltung 12. Die Netzfrequenzmesseinrichtung 8 ist mit der Lastregelungseinrichtung 10 in Wirkverbindung derart, dass abhängig von der durch die Netzfrequenzmesseinrichtung 8 gemessenen Netzfrequenz die Lastregelungseinrichtung 10 die Ladesteuerschaltung 12 zum Regulieren der an das Elektrofahrzeug über das Ladekabel 6 abgegebenen elektrischen Leistung ansteuern kann. Hierbei kann das Fahrzeug zur Lastreduktion angewiesen und die Konformität des Fahrzeugs mit dieser Anweisung überwacht werden. Die Ladestation 2 arbeitet beispielhaft entsprechend des in Fig. 2 dargestellten Verfahrens.

Zunächst misst 14 die Netzfrequenzmesseinrichtung 8 die Netzfrequenz an dem Energiekabel 4. Die gemessene Netzfrequenz wird mit einer Soll-Frequenz verglichen 16. Hierbei wird beispielhaft für Europa eine Soll-Frequenz von 50Hz angenommen. Stimmt die Netzfrequenz mit der Soll-Frequenz überein, so verzweigt das Verfahren zurück in Schritt 14. Weicht die Netzfrequenz beispielsweise um mehr als 0,2Hz, oder mehr als 0,5Hz von der Soll-Frequenz ab, so wird die Lastregulierungseinrichtung 10 aktiviert 18. Die Lastregulierungseinrichtung 10 ermittelt anhand der Frequenzabweichung eine Absenkungskennlinie aus einer Datenbank 20. Hierbei kann die Lastregulierungseinrichtung 10 beispielsweise den Frequenzhub, den Frequenzgradienten und/oder die Dauer der Frequenzabweichung berücksichtigen.

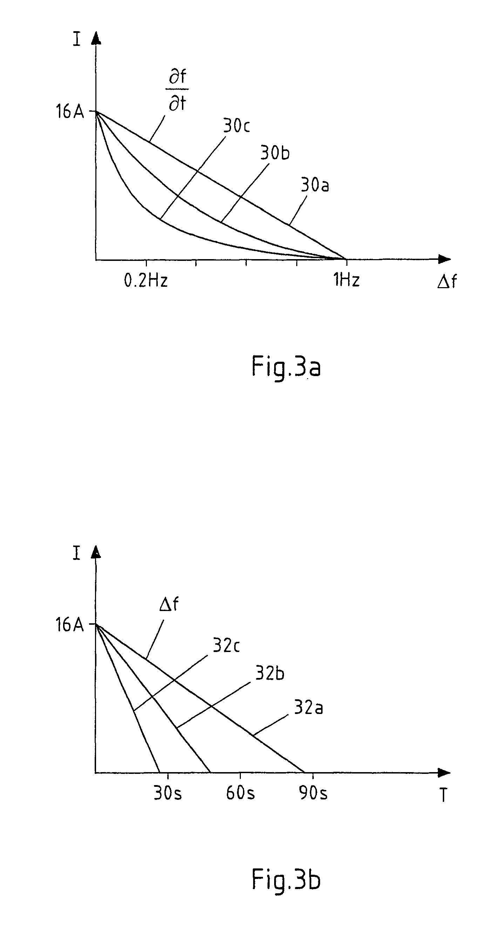

Fig. 3a zeigt beispielhaft eine erste Absenkungskennlinienschar 30. Zu erkennen ist, dass beispielsweise eine Ladestromstärke von 16A abhängig von der Abweichung der Netzfrequenz (Δf) abgesenkt wird. In Fig. 3a sind drei Kurven 30a, 30b, 30c dargestellt, welche beispielsweise abhängig vom Frequenzgradienten (∂f/∂t)ausgewählt werden können. Beispielsweise kann eine erste Kennlinie 30a bei einem Frequenzgradienten von 0,1Hz/s ausgewählt werden. Ist der Frequenzgradient 0,2Hz/s, so kann beispielsweise die Absenkungskennlinie 30b ausgewählt werden und beträgt der Frequenzgradient 0,4Hz/s, so kann die Absenkungskennlinie 30c ausgewählt werden. Zu erkennen ist, dass mit steigendem Frequenzgradienten eine schnellere Absenkung des Ladestroms bereits bei geringen Frequenzabweichungen erreicht wird. Somit kann die Lastregulierungseinrichtung 10 im Schritt 18 abhängig vom Frequenzgradienten eine Absenkungskennlinie 30a-c auswählen und die Ladestromstärke abhängig von der absoluten Frequenzabweichung regulieren.

Auch ist es möglich, dass eine Absenkungskennlinie abhängig von der Dauer der Frequenzabweichung sein kann. So ist beispielsweise in Fig. 3b eine Absenkungskennlinienschar 32 dargestellt, welche einerseits die Absenkung des Ladestroms von 16A abhängig von der Dauer einer Frequenzabweichung (T) angibt. Eine erste Absenkungskennlinie 32a kann beispielsweise bei einer Frequenzabweichung (Δf) von 0,2Hz gewählt werden. Ist die Frequenzabweichung 0,3Hz, so kann eine zweite Absenkungskennlinie 32b gewählt werden. Hier ist zu erkennen, dass bei dieser Absenkungskennlinie bereits bei einer Dauer der Frequenzabweichung von ca. 50s eine komplette Abschaltung des Ladestroms vorliegt. Eine dritte Absenkungskennlinie 32c kann beispielsweise bei einer Frequenzabweichung von 0,4Hz gewählt werden. Bei dieser Kennlinie erfolgt die Komplettabschaltung bereits schneller als 30s.

Es sei angemerkt, dass alle Zahlenangaben in den Figuren 3a und 3b rein beispielhaft sind und lediglich verdeutlichen sollen, dass die Absenkungskennlinien abhängig von verschiedenen Faktoren wählbar sind.

Andere Kennlinien sind auch denkbar, beispielsweise eine Kennlinie abhängig von dem Frequenzgradienten und der Dauer.

Nachdem die Lastregulierungseinrichtung 10 in Schritt 18 die Absenkungskennlinie abhängig von dem Frequenzhub, dem Frequenzgradienten und/oder der Absenkungsdauer gewählt hat, kann mittels der Absenkungskennlinie durch die Ladesteuerschaltung 12 eine Absenkung des Ladestroms an das Elektrofahrzeug über das Ladekabel kommuniziert 22 werden. Dem Elektrofahrzeug wird über das Ladekabel 6 mitgeteilt, dass der maximale Ladestrom verringert werden muss. Die Höhe des maximalen Ladestroms kann aus der Absenkungskennlinie entnommen werden.

Nachdem an das Elektrofahrzeug kommuniziert 22 wurde, dass die Ladestromstärke reduziert werden muss, wird in einem Schritt 24 überwacht, ob das Elektrofahrzeug tatsächlich den Ladestrom reduziert. Ist dies nicht der Fall, so wird in Schritt 26 das Elektrofahrzeug komplett von der Ladestation 2 getrennt. Daraufhin wird zu Schritt 14 zurückgesprungen.

Verhält sich das Elektrofahrzeug konform zu der Regulierung durch die Ladesteuerschaltung 12, wird ebenfalls zu Schritt 14 zurückgesprungen. Im Schritt 14 wird erneut die Netzfrequenz gemessen und im Schritt 16 wird die Netzfrequenz gegenüber der Soll-Frequenz überwacht und entsprechende Schritte werden eingeleitet.

Sinkt die Netzfrequenz weiter ab oder verbleibt die Netzfrequenz auf einem niedrigen Niveau, so wird im Schritt 18 verzweigt.

Steigt die Netzfrequenz dagegen an, so wird in Schritt 28 verzweigt. Im Schritt 28 kann eine Anhebungskennlinie ausgewählt werden, welche ein Anheben der Ladestromstärke bewirkt. Hierdurch kann im Schritt 28 auf eine steigende Netzfrequenz reagiert werden, in dem die Absenkung zurückgenommen wird. Darüber hinaus kann beispielsweise in Schritt 28 auch bei einer Netzfrequenz, welche über der Soll-Frequenz liegt, die Ladestromstärke abhängig von einer Anhebungskennlinie erhöht werden. Die im Schritt 28 vollzogenen Schritte entsprechen denen in den Schritten 18 bis 24, wobei die Ladestromstärke nicht abgesenkt wird, sondern angehoben wird und somit Kennlinien mit entsprechend umgekehrten Vorzeichen verwendet werden können.

Durch das gegenständliche Verfahren und die gegenständliche Ladestation ist es möglich, eine Netzstabilisierung dezentral durchzuführen. Bei der vorgeschlagenen Netzstabilisierung werden lediglich Lasten reguliert, so dass keine Netzeinspeiser von einem Lastabwurf betroffen sind.

## Patentansprüche

1. Ladestation für Elektrofahrzeuge umfassend:
- eine Netzfrequenzmesseinrichtung (8) eingerichtet zum Erfassen einer Netzfrequenz und zum Detektieren einer Abweichung der Netzfrequenz von einer Soll-Frequenz,
- eine Lastregelungseinrichtung (10) in Wirkverbindung mit der Netzfrequenzmesseinrichtung (8), derart, dass bei einer detektierten Abweichung der Netzfrequenz von der Soll-Frequenz die Lastregelungseinrichtung (10) die an ein Elektrofahrzeug von der Ladestation (2) abgegebene elektrische Leistung regelt,
- wobei die Lastregelungseinrichtung (10) zur Reduktion der abgegebenen elektrischen Leistung eine reduzierte Ladeleistung an das Elektrofahrzeug kommuniziert,
**dadurch gekennzeichnet,**
**dass** die Lastregelungseinrichtung (10) die von der Ladestation (2) abgegebene elektrische Leistung entlang einer Absenkkennlinie (30, 32) abhängig von dem durch die Netzfrequenzmesseinrichtung (8) erfassten Abweichungsbetrag, der Abweichungsdauer und/oder dem Frequenzgradienten reduziert.

2. Ladestation nach Anspruch 1, **dadurch gekennzeichnet, dass** die Lastregelungseinrichtung (10) bei einer Absenkung der Netzfrequenz von der Soll-Frequenz die an das Elektrofahrzeug von der Ladestation (2) abgegebene elektrische Leistung reduziert.

3. Ladestation nach Anspruch 2, **dadurch gekennzeichnet, dass** die Lastregelungseinrichtung (10) zur Reduktion der abgegebenen elektrischen Leistung eine Ladestromstärke begrenzt.

4. Ladestation nach einem der vorangehenden Ansprüche,
**dadurch gekennzeichnet, dass** die Absenkkennlinie (30, 32) abhängig von dem durch die Netzfrequenzmesseinrichtung (8) erfassten Abweichungsbetrag, der Abweichungsdauer und/oder dem Frequenzgradienten ist.

5. Ladestation nach einem der vorangehenden Ansprüche,
**dadurch gekennzeichnet, dass** bei einer detektierten Erhöhung der Netzfrequenz die Lastregelungseinrichtung (10) die an ein Elektrofahrzeug von der Ladestation (2) abgegebene elektrische Leistung erhöht.

6. Verfahren zum Betreiben einer Ladestation für Elektrofahrzeuge umfassend:
- Erfassen (14) einer Netzfrequenz,
- Detektieren (16) einer Abweichung der Netzfrequenz von einer Soll-Frequenz, und
- Regeln (18, 22) einer an ein Elektrofahrzeug von der Ladestation (2) abgegebenen elektrischen Leistung bei einer detektierten Abweichung der Netzfrequenz von der Soll-Frequenz,
- wobei zur Reduktion der abgegebenen elektrischen Leistung eine reduzierte Ladeleistung an das Elektrofahrzeug kommuniziert wird,
**dadurch gekennzeichnet,**
**dass** die von der Ladestation (2) abgegebene elektrische Leistung entlang einer Absenkkennlinie (30, 32) abhängig von dem erfassten Abweichungsbetrag, der Abweichungsdauer und/oder dem Frequenzgradienten reduziert wird.

7. Verfahren nach Anspruch 6, **dadurch gekennzeichnet, dass** das Regeln (18, 22) der an das Elektrofahrzeug von der Ladestation (2) abgegebenen elektrischen Leistung ein Reduzieren oder Erhöhen ist.

8. Verfahren nach Anspruch 6 oder 7, **dadurch gekennzeichnet, dass** das Elektrofahrzeug bei einer kommunizierten Reduktion der Ladeleistung eine Ladestromstärke reduziert.

9. Verfahren nach einem der Ansprüche 6 bis 8, **dadurch gekennzeichnet, dass** die Absenkkennlinie (30, 32) abhängig von dem erfassten Abweichungsbetrag, der Abweichungsdauer und/oder dem Frequenzgradienten bestimmt wird.

## Claims

1. Charging station for electric vehicles, comprising:
- a network frequency measuring device (8), arranged to acquire a network frequency and to detect a deviation in the network frequency from a reference frequency,
- a load regulating device (10) in operational connection with the network frequency measuring device (8) such that, upon a deviation from the reference frequency being detected in the network frequency, the load regulating device (10) regulates the electrical power emitted to an electric vehicle by the charging station (2),
- wherein the load regulating device (10) communicates a reduced charging power to the electric vehicle to reduce the electrical power emitted,
**characterized in that**
- the load regulating device (10) reduces the electrical power emitted by the charging station (2) along a reduction characteristic curve (30, 32),
- depending on the deviation amount detected by the network frequency measuring device (8), the duration of the deviation, and/or the frequency gradient.

2. Charging station according to Claim 1, **characterised in that**, upon a drop in the network frequency below the reference frequency, the load regulating device (10) reduces the electrical power emitted to the electric vehicle by the charging station (2).

3. Charging station according to Claim 2, **characterised in that**, to reduce the electrical power emitted, the load regulating device (10) imposes a limit on charging current.

4. Charging station according any of the preceding claims, **characterised in that** the reduction characteristic curve (30, 32) is depending on the deviation amount detected by the network frequency measuring device (8), the duration of the deviation, and/or the frequency gradient.

5. Charging station according to one of the preceding claims, **characterised in that**, upon an increase being detected in the network frequency, the load regulating device (10) increases the electrical power emitted to an electric vehicle by the charging station (2).

6. Method for operating a charging station for electric vehicles, comprising:
- acquisition (14) of a network frequency,
- detection (16) of a deviation in the network frequency from a reference frequency, and
- regulation (18, 22) of electrical power emitted to an electric vehicle by the charging station (2) upon a deviation from the reference frequency being detected in the network frequency,
- wherein the load regulating device (10) communicates a reduced charging power to the electric vehicle to reduce the electrical power emitted,
**characterized in that**
- the load regulating device (10) reduces the electrical power emitted by the charging station (2) along a reduction characteristic curve (30, 32),
- depending on the deviation amount detected by the network frequency measuring device (8), the duration of the deviation, and/or the frequency gradient.

7. Method according to Claim 6, **characterised in that** the regulation (18, 22) of the electrical power emitted to the electric vehicle by the charging station (2) is a reduction or increase.

8. Method according to Claim 6 or 7, **characterised in that**, upon a reduction in the charging power being communicated, the electric vehicle reduces a charging current.

9. Method according to one of claims 6 to 8, **characterised in that** the reduction characteristic curve (30, 32) is determined as a function of the acquired deviation amount, the duration of the deviation, and/or the frequency gradient.

## Revendications

1. Station de charge pour véhicules électriques qui comprend :
- un dispositif de mesure de la fréquence de réseau (8) qui est aménagée pour la saisie d'une fréquence de réseau et pour la détection d'une divergence entre ladite fréquence de réseau et une fréquence de consigne,
- un dispositif de régulation de charge (10) qui est en liaison active avec le dispositif de mesure de la fréquence de réseau (8) de telle manière que, lors de la détection d'une divergence entre la fréquence de réseau et la fréquence de consigne, le dispositif de régulation de charge (10) régule la puissance électrique délivrée au véhicule électrique par la station de charge (2),
- sachant que, pour la réduction de la puissance électrique délivrée, le dispositif de régulation de charge (10) communique au véhicule électrique une puissance de charge réduite,
**caractérisée en ce que** le dispositif de régulation de charge (10) réduit la puissance électrique délivrée par la station de charge (2) le long d'une ligne caractéristique de réduction (30, 32) en fonction de la valeur de la divergence captée par le dispositif de mesure de la fréquence de réseau (8), de la durée de la divergence et / ou du gradient de fréquence.

2. Station de charge selon la revendication 1,
**caractérisée en ce que**, lorsque la fréquence de réseau descend au-dessous de la fréquence de consigne, le dispositif de régulation de charge (10) réduit la puissance électrique délivrée au véhicule électrique par la station de charge (2).

3. Station de charge selon la revendication 2,
**caractérisée en ce que** le dispositif de régulation de charge (10) limite une intensité de courant de charge pour réduire la puissance électrique délivrée.

4. Station de charge selon l'une des revendications précédentes,
**caractérisé en ce que** la ligne caractéristique de baisse (30, 32) dépend de la valeur de la divergence captée par le dispositif de mesure de la fréquence de réseau (8), de la durée de la divergence et / ou du gradient de fréquence.

5. Station de charge selon l'une des revendications précédentes,
**caractérisée en ce que**, lors de la détection d'une élévation de la fréquence de réseau, le dispositif de régulation de charge (10) augmente la puissance électrique délivrée au véhicule électrique par la station de charge (2).

6. Procédé de fonctionnement d'une station de charge pour véhicules électriques qui comprend :
- la saisie (14) d'une fréquence de réseau,
- la détection (16) d'une divergence entre la fréquence de réseau et la fréquence de consigne, et
- la régulation (18, 22) d'une puissance électrique délivrée au véhicule électrique par la station de charge (2) lors de la détection d'une divergence entre la fréquence de réseau et la fréquence de consigne,
- sachant que, pour la réduction de la puissance électrique délivrée, une puissance de charge réduite est communiquée au véhicule électrique, **caractérisé en ce que** la puissance électrique délivrée par la station de charge (2) est réduite le long d'une ligne caractéristique de réduction (30, 32) en fonction de la valeur de la divergence captée, de la durée de la divergence et / ou du gradient de fréquence.

7. Procédé selon la revendication 6,
**caractérisé en ce que** la régulation (18, 22) de la puissance électrique délivrée au véhicule électrique par la station de charge (2) consiste en une réduction ou une augmentation.

8. Procédé selon revendication 6 ou 7,
**caractérisé en ce que** le véhicule électrique réduit l'intensité de courant de charge lors de la communication d'une réduction de la puissance de charge.

9. procédé selon l'une des revendications 6 à 8,
**caractérisé en ce que** la ligne caractéristique de réduction (30, 32) est déterminée en fonction de la valeur de la différence captée, de la durée de différence et / ou du gradient de fréquence.
